# EUROPEAN PATENT APPLICATION

(11) **EP 2 624 581 A1**
(43) Date of publication of application: **07.08.2013**
(21) Application number: 12154105.6
(22) Date of filing: 06.02.2012
(51) Int. Cl.: H04N 21/422, H04N 21/426, H04N 21/431

(54) **Division of a graphical display into regions**

(71) Applicant: Research In Motion Limited, Waterloo, ON N2L 3W8 (CA)
(72) Inventor: Sibecas, Salvador, Sunrise, FL 33323 (US); Eaton, Eric Thomas, Sunrise, FL 33323 (US)
(74) Representative: Greenaway, Martin William

(57) **Abstract**

The present invention provides a method and system to divide a main screen on a wireless device (340) into two or more logical screens or regions (FIG. 1A, 1B, 1C, 1D). Each region is capable of presenting its own multimedia data or content without user intervention. The audio signal for a desired multimedia data is sent via wireless connections, such as Bluetooth or other wireless personal area networks (WPAN) (350), to each user (360, 362, 364). The present invention enables multiple content viewing on a single wireless device (340). Also described are eyeglasses (402 and 502) capable of selecting which audio stream to receive based on a user's gaze position to the display (480, 580) that has been divided into multiple regions.

## Description

### FIELD OF THE DISCLOSURE

The present disclosure generally relates to graphical displays, and more particularly to displaying two or more multimedia signal sources on a graphical display simultaneously.

### BACKGROUND

Televisions offer picture in picture (PiP) in which one program or channel is displayed on the full television screen at the same time one or more other programs are displayed in inset windows. PiP is often used to watch one program while waiting for another program to start or advertisement to finish.

However, the selection of the audio related to one picture when multiple pictures are simultaneously displayed is often cumbersome and requires user input with a remote control.

Displaying two or more communication channels on a display is often difficult. A communication channel may be defined as either a physical connection, such as WIFI®, or a logical connection, such as a sub-channel in a multiplexed over-the-air broadcast. Dividing a display based on a number of physical or logical communications is not automatic and requires user input.

Eyeglasses for 3-D viewing of multimedia data are available. Eyeglasses are also available for simultaneous viewing of distinct multimedia content on a display. One example is SimulView™ on Sony® Corporation's 3D Playstation®. Using the SimulView™ feature, each viewer or player gets their own unique view. Selecting audio related to one picture or content on a display when multiple pictures are simultaneously displayed is not always possible. The same audio stream is given to both players rather than a unique audio stream related to the content being viewed.

### BRIEF DESCRIPTION OF THE DRAWINGS

The accompanying figures where like reference numerals refer to identical or functionally similar elements throughout the separate views, and which together with the detailed description below are incorporated in and form part of the specification, serve to further illustrate various embodiments and to explain various principles and advantages all in accordance with the present disclosure, in which:

FIG. 1 is a block diagram of a display of a wireless device divided into two or more regions;

FIG. 2 is a flow chart illustrating automatically dividing a display into a number of regions corresponding to the number of communication channels;

FIG. 3 is a set of eyeglasses with an illumination source used to select an audio channel based on a user's gaze position at a region on a display;

FIG. 4 is a set of eyeglasses with eye tracking cameras used to select an audio channel based on a user's gaze position at a region on a display;

FIG. 5 is a flow diagram for selection of an audio channel using the eyeglasses in FIG. 3 and FIG. 4; and

FIG. 6 is a block diagram of a wireless device of FIG. 2 and associated components in which the systems and methods disclosed herein may be implemented.

### DETAILED DESCRIPTION

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the disclosed subject matter in virtually any appropriately detailed structure and function. Further, the terms and phrases used herein are not intended to be limiting, but rather, to provide an understandable description.

The terms "a" or "an", as used herein, are defined as one or more than one. The term plurality, as used herein, is defined as two or more than two. The term another, as used herein, is defined as at least a second or more. The terms "including" and "having" as used herein, are defined as comprising (i.e., open language). The term "coupled" as used herein, is defined as "connected" although not necessarily directly, and not necessarily mechanically.

The term "display" means any type of output device for presentation of information in a visual form including electronic visual displays, computer monitors, television sets, and both 2-D and 3-D output devices.

The term "wireless device" or "wireless communication device" is intended to broadly cover many different types of devices that can receive signals, such as BLUETOOTH®, WI-FI®, satellite and cellular. For example, and not for any limitation, a wireless communication device can include any one or a combination of the following: a two-way radio, a cellular telephone, a mobile phone, a smartphone, a two-way pager, a wireless messaging device, a laptop/computer, a personal digital assistant, a netbook, a tablet computer, and other similar devices.

Described below are systems and methods that automate dividing of a display into two or more logical screens or regions. Each region is capable of presenting its own or distinct multimedia data or content without user intervention. The audio channel for a desired multimedia data is sent via wireless connections, such as BLUETOOTH^{®}, WI-FI^{®}, or other wireless personal area networks (WPAN), to each user. The described examples enable multiple content viewing on a single wireless device.

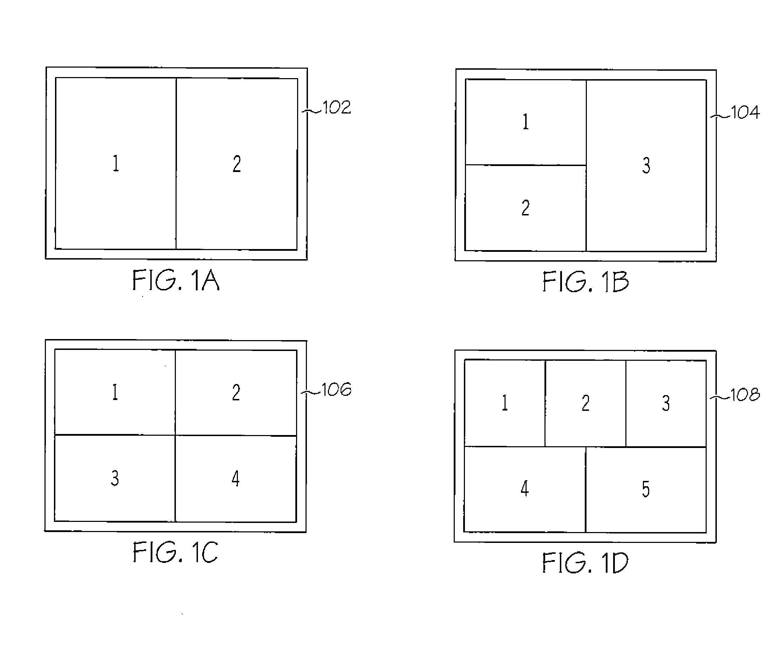

Turning to FIG. 1, shown are several examples of a display that is divided into two or more regions. In this example, the display is a tablet computer. Each region of the display is labeled with a number and capable of displaying multimedia data separate from the other regions on the displays. This multimedia data includes television shows, web pages, videos and text. More specifically, FIG. lA illustrates a display 102 with two regions designated "1" and "2". FIG. 1 B illustrates a display 104 with three regions designated "1", "2", and "3". Likewise, FIG. 1C illustrates a display 106 with four regions designated "1", "2", "3", and "4". Likewise, FIG. ID illustrates a display 108 with five regions designated "1", "2", "3", "4", and "5". Although these regions are shown generally as rectangular, it is important to note that other geometric regions and shapes are within the true scope of the described examples.

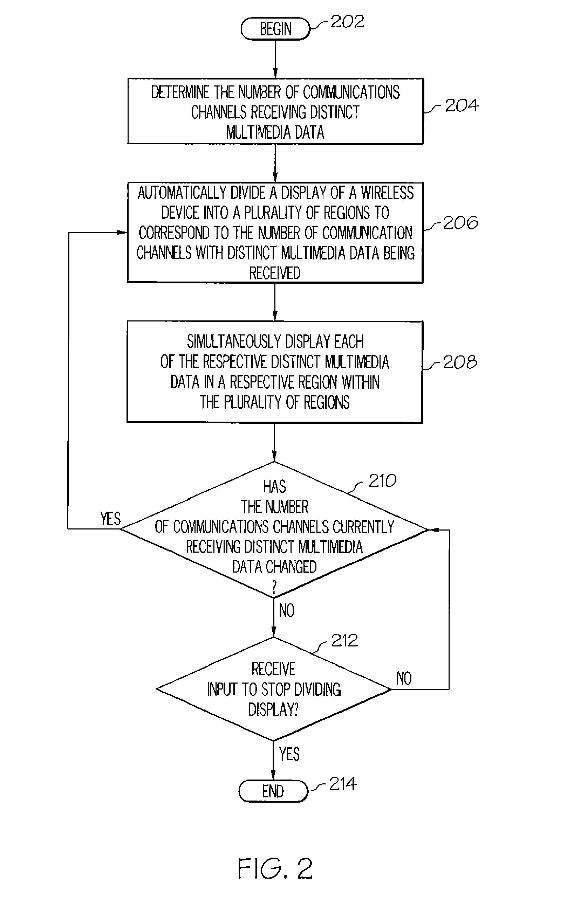

FIG. 2 is a flow chart illustrating the process of automatically dividing a display into a number of regions corresponding to the number of communication channels that are currently receiving data. The term communication channel is defined as either a physical connection or a logical connection to convey information messages between at least one sender and at least one receiver. Two or more messages are often multiplexed over one connection, such as channels and sub-channels in an over-the-air television broadcast. Further, in one example, a wireless communication channel is currently receiving multimedia data when a video carrier signal is automatically detected.

The process begins in step 202 and immediately proceeds to step 204 in which the number of communication channels, such as WI-FI^{®}, that are currently receiving distinct multimedia data is determined. Multimedia data is broadly defined in this discussion to include broadcast television shows, streaming television, and streaming video and audio programs. In one example, two communication channels have distinct multimedia data when the multimedia data being compared does not match and do not have an association with each other, such as, program information, or close caption. Next in step 206, the display of the wireless device is automatically divided into a number of regions to correspond to the number of communication channels with distinct multimedia data being received. These regions are shown in FIGS. 1A-1D.

In step 208, each of the respective distinct multimedia data in a respective region within the plurality of regions are each displayed simultaneously. The term "simultaneously" is used, in one example, to mean each of the regions are displayed at the same time. Next, a determination is made, at step 210, whether the number of communication channels that are currently receiving distinct multimedia data is changed. In the event the number of communication channels that are currently receiving distinct multimedia data is changed, the display is automatically re-divided, in step 206, to correspond to the number of communication channels. Otherwise, if in response to the number of communication channels currently receiving distinct multimedia data has not changed, a determination is made on whether input from a user or system, such as a timer, or program to terminate the automatic division of displays is received in step 212. In response to that input being received, the process flow ends in step 214; otherwise, the process flow loops by returning to step 210 and proceeds as described above. It is important to note that in this example the display is automatically divided into a number of regions to correspond to the number of communication channels with multimedia data being received. In one example, the distinct multimedia data is simultaneously displayed from each of the communication channels in each of the regions of the display. In another example, the display is automatically divided into a number of regions that is related to but does not directly correspond to the number of communication channels. For example, two communication channels may result in the display of two, three or four regions on the display. These extra regions may be used to present additional content such as PiP, sub-titles, other metadata or combinations of these.

Although wireless communication channels have been described in the examples above, it should be understood that wired communication channels, such as Ethernet ports, can operate using the methods and system described for wireless communication channels.

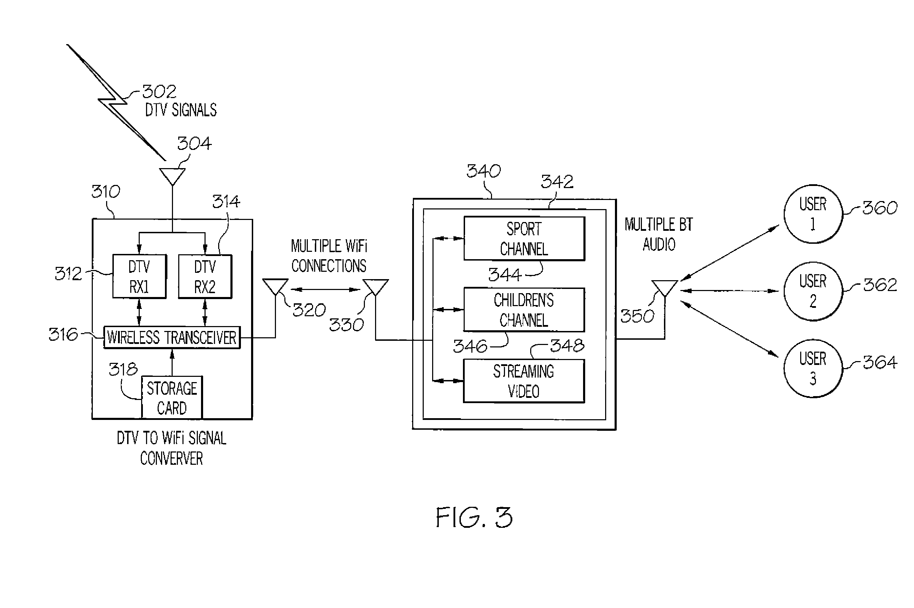

FIG. 3 is a functional diagram of a wireless device 340 with a display 342 communicating with a converter/receiver 310 that is receiving multiple multimedia data sources. The multimedia stream 302 in this example is a digital television broadcast being received by two tuners 312, 314 through antenna 304. It is important to note that other media streams including video conferencing, streaming audio and streaming video are also within the true scope of the described examples. The two or more tuners 312, 314 select a multimedia data source, such as channels, or sub-channels in the case of for example HDTV, for routing to a wireless transceiver 316. In another example, more tuners are used to provide additional multimedia data source or channel selection. The wireless transceiver 316, in one example, is a wireless hotspot for a wireless local area network or other wireless distribution system with an appropriate antenna 320. In one example the wireless local area network (WLAN) is a Wt-FI® network, but other WLANs with sufficient bandwidth to support communication multimedia data are possible including a WIMAX^{®} network.

Local storage 318 is electronically coupled to the wireless transceiver 316 and enables time shifting of multimedia data for later viewing. This time shifting is a function performed by, for example, a digital video recorder (DVR) and allows a multimedia data set to be recorded for future playback. In this example, the number of how many WLAN connections is determined by the wireless transceiver 316.

Continuing further, the wireless device 340 with display 342 receives three broadcasts: i) a sports channel 344, ii) a children's channel 346, and iii) a streaming video 348. A second wireless local area network, which is a short-range personal area network (PAN) 350, in this example, is shown coupled to wireless device 340. This second wireless network 350 has a lower bandwidth requirement of the WLAN because the second wireless network generally is used to carry audio content through an audio subsystem coupled to PAN 348 for each multimedia data stream or channel to a user 1 360, user 2 362, and user 3 364. Examples of PAN 348 include BLUETOOTH^{®}, ZIGBEE^{®}, and Near Field Communications (NFC).

Examples of a user interface for selecting an audio channel are now discussed. One example is a control button (not shown) located on the wireless device 340. This control button can be selected by a user's hand, with a wireless remote, through voice commands, or through any combination of these.

Another example for selecting the audio channel includes the use of eyeglasses, such as 3-D eyeglasses with special electronics. 3-D eyeglasses are used to create an illusion of three dimensions on a two dimensional surface by providing each eye with different visual information. Classic 3-D glasses create the illusion of three dimensions when viewing specially prepared images. The classic 3-D glasses have one red lens and one blue or cyan lens. Another kind of 3-D glasses uses polarized filters, with one lens polarized vertically and the other horizontally, with the two images required for stereo vision polarized the same way. Polarized 3-D glasses allow for color 3-D, while the red-blue lenses produce a dull black-and-white picture with red and blue fringes. A more recent type of 3-D eyeglasses uses electronic shutters, while virtual reality glasses and helmets have separate video screens for each eye. A 3-D effect can also be produced using LCD shutter glasses.

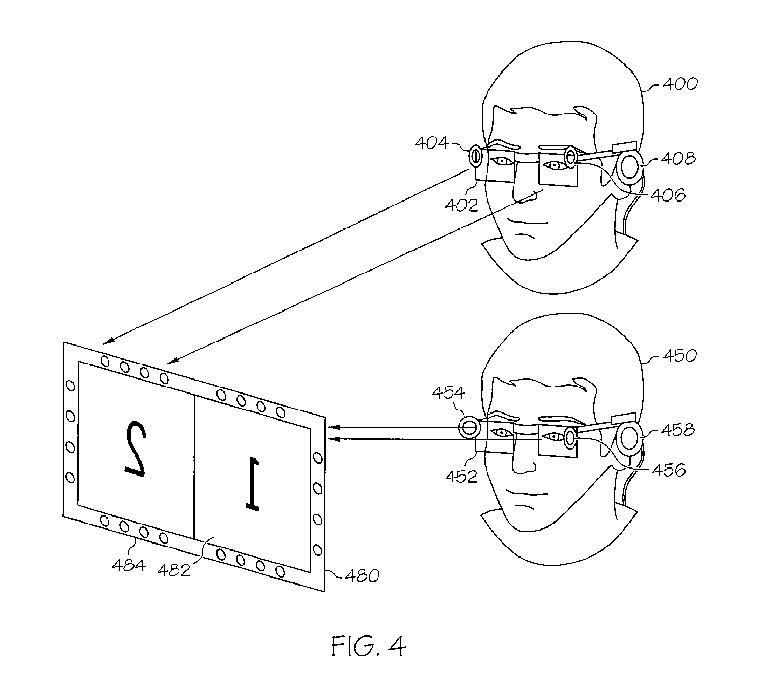

FIG. 4 illustrates two users 400 and 450 each with a set of eyeglasses 402, 452 with illumination sources 404, 454 and 406, 456 and headphones 408, 458. The eyeglasses 402, 452 are used to select an audio channel based on a user's gaze position to a region on a display 482 of a wireless device 480. Position transmitter may be coupled to the eyeglasses 402, 452 to transmit the user's gaze position. In one example the position transmitter includes illumination sources, such as infrared or low power LASER that minimize visible reflections to the users from wireless device 480. A set of photosensitive receivers, gaze sensors, or optical sensors 484 are mounted along the edge of the display 482 of wireless device 480. It is important to note that other positions of the optical sensors 484 are also possible in further examples. For example, an external optical bar (not shown) could be coupled to the wireless device 480 rather than built into the wireless device 480. Each illumination source 404, 406, 454, and 456 for each set of eyeglasses 402, 452, is set to a unique frequency to enable the photosensitive receivers to identify and discriminate between each set of eyeglasses 402, 452. Shown on the display are two regions "1" and "2" of the display 482. The audio source for each region is the region at which the user is gazing is wireless routed to the headphones 408, 458 of that user's eyeglasses 402, 452.

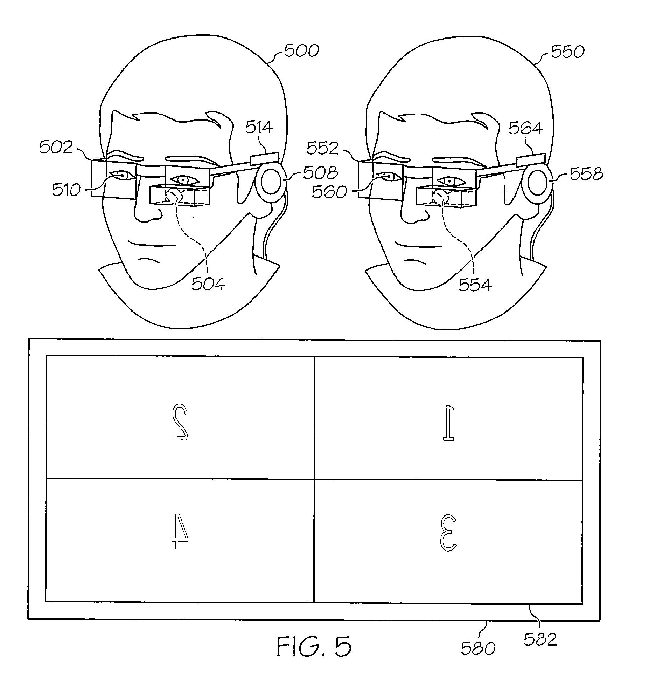

FIG. 5 is another example of two eyeglasses 502, 552 that are able to select audio channels for each respective wearer. In this example, optical sensors or eye track cameras 504, 554 are used in the eyeglasses themselves to track user eye position or gaze position 510, 560. The gaze position of the eye 560 relative to the display 582 is then transmitted back to the wireless device 580 over a position transmitter 514, 564 to select the correct audio channel based on the gaze. A receiver 508, 514 is coupled to the eye glasses (502, 552) to receive audio being sent by wireless device 304 corresponding to the region of the display 480, 580 to which the user's gaze is being tracked. In this example, the wireless device 580 with display 582 is divided into four separate regions 1, 2, 3, and 4. The details of electronics for tracking eye gaze with a camera are well understood. Note, the orientation of the eyeglasses 502, 552 relative to the display 582 is determined as described above for FIG. 4.

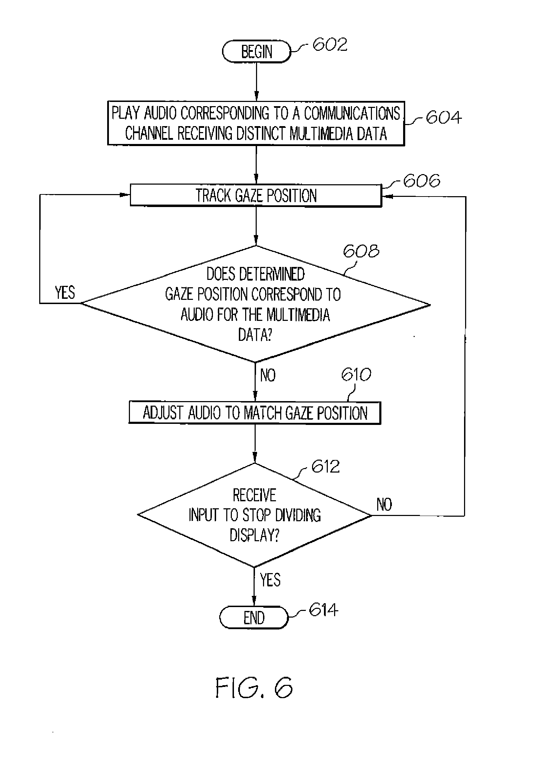

The process of selecting an audio channel by the electronic device based on gaze is now described with reference to FIG. 6. The process begins in step 602 and immediately proceeds to step 604 in which audio corresponding to a communications channel receiving distinct multimedia data is played. The audio may be played through a wired audio port, a wireless audio port, such as such as BLUETOOTH^{®}, WI-FI^{®}, or other wireless personal area networks (WPAN), to each user. The audio may be sent over a communications channel that supports multiplex. Using a multiplex communication channel, two or more users can receive separate audio channels from a one multiplex transmitter such as WI-FI^{®}.

In step 606, the user's gaze position relative to two or more regions of the display is tracked. In one example, the gaze position may be tracked using either the technique described with reference to FIG. 4 or the technique described with reference to FIG. 5, or a combination of both. A test is made in step 608 to determine if a currently selected audio channel is "played" that corresponds to audio associated with the multimedia data displayed at the region of the display corresponding to the gaze position of step 606. In the event the user's gaze position has not changed, the process repeats the tracking in step 606. Otherwise, if the user's gaze position does not correspond to the audio for the multimedia data at which the user is gazing, the audio or audio channel is adjusted to match the gaze position in step 610. This process repeats in step 612 to step 606 until the wireless device receives input from the user to stop dividing the display; otherwise, the process ends in step 614. In another example, the audio is selected by accepting a manual user input on the wireless device using buttons or selections (not shown), such as a user interface presented on the display 582

Discussion thus far is using multiple regions of the display of the wireless device associated with multiple users. In another example, a single user is able to be simultaneously presented with two or more presentations of multimedia data but select audio channel for one of the presentations separately. In such an example, the eyeglasses of FIG. 4 and FIG. 5 will work for one user as well as more than one user viewing multiple multimedia data sources.

In another example, not only is the gaze as determined by eyeglasses 402, 452, 502, 552 used to select the desired audio channel, the determined gaze is further used to control other graphic elements on the display. For example, the determined gaze can be used to scroll a window, select a button, drag and drop items, or a combination of these. Further, this feature of tracking the gaze can be enabled or disabled. One method to disable tracking a user's gaze is the user's viewing a special area of the screen, or by operating a special button on the glasses, by voice commands, or a combination of these. This will enable a user to control when the gaze determination function and corresponding audio selection is activated.

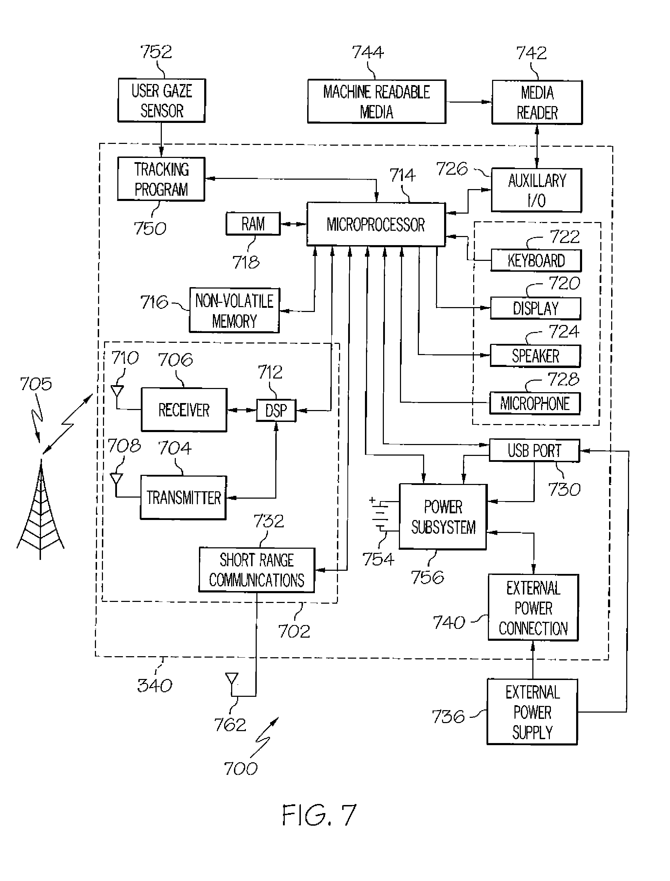

FIG. 7 is a block diagram of a wireless device 700 and associated components in which the systems and methods disclosed herein may be implemented. The wireless device 700 is an example of a wireless device 340 of FIG. 3, a wireless device 480 of FIG. 4, and a wireless device 580 of FIG. 5. In this example, the wireless device 700 is a two-way communication device with voice and data communication capabilities. Such wireless devices communicate with a wireless voice or data network 705 using a suitable wireless communications protocol. Wireless voice communications are performed using either an analog or digital wireless communication channel. Data communications allow the wireless device 700 to communicate with other computer systems via the Internet. Examples of wireless devices that are able to incorporate the above described systems and methods include, for example, a data messaging device, a two-way pager, a cellular telephone with data messaging capabilities, a wireless Internet appliance or a data communication device that may or may not include telephony capabilities.

The illustrated wireless device 700 is an example of a wireless device that includes two-way wireless communications functions. Such wireless devices incorporate a communication subsystem 702 comprising elements such as a wireless transmitter 704, a wireless receiver 706, and associated components such as one or more antenna elements 708 and 710. A digital signal processor (DSP) 712 performs processing to extract data from received wireless signals and to generate signals to be transmitted. The particular design of the communication subsystem 702 is dependent upon the communication network and associated wireless communications protocols with which the device is intended to operate.

The wireless devices 700 include a microprocessor 714 that controls the overall operation of the wireless devices 340, 480, and 580. The microprocessor 714 interacts with the above described communications subsystem elements and also interacts with other device subsystems such as non-volatile memory 716, random access memory (RAM) 718, user interfaces, such as a display 720, a keyboard 722, a speaker 724 or other audio port, and a microphone 728, auxiliary input/output (I/O) device 726, universal serial bus (USB) Port 730, short range communication subsystems 732, a power subsystem 756 and any other device subsystems.

A battery 754 or other power pack such as fuel cell, or solar cell or combination thereof is connected to a power subsystem 756 to provide power to the circuits of the wireless device 700. The power subsystem 756 includes power distribution circuitry for providing power to the wireless devices 700 and also contain battery charging circuitry to manage recharging the battery 754. The external power supply 736 is able to be connected to an external power connection 740 or through a USB port 730.

The USB port 730 further provides data communication between the wireless device 700 and one or more external devices, such as an information processing system. Data communication through USB port 730 enables a user to set preferences through the external device or through a software application and extends the capabilities of the device by enabling information or software exchange through direct connections between the wireless device 700 and external data sources rather than via a wireless data communication network. In addition to data communication, the USB port 730 provides power to the power subsystem 756 to charge the battery 754 or to supply power to the electronic circuits, such as microprocessor 714, of the wireless device 700.

Operating system software used by the microprocessor 714 is stored in non-volatile memory 716. Further examples are able to use a battery backed-up RAM or other non-volatile storage data elements to store operating systems, other executable programs, or any combination of the above. The operating system software, device application software, or parts thereof, are able to be temporarily loaded into volatile data storage such as RAM 718. Data received via wireless communication signals or through wired communications are also able to be stored to RAM 718.

The microprocessor 714, in addition to its operating system functions, is able to execute software applications on the wireless device 700. A predetermined set of applications that control basic device operations, including at least data and voice communication applications, is able to be installed on the wireless device 700 during manufacture. Examples of applications that are able to be loaded onto the devices may be a personal information manager (PIM) application having the ability to organize and manage data items relating to the device user, such as, but not limited to, e-mail, calendar events, voice mails, appointments, and task items. Another example is a tracking program 750 which in conjunction with user gaze sensor 752 tracks the user's gaze position as described in FIGs. 4 and 5 and/or the processes described in FIGs. 2 and 6.

Further applications may also be loaded onto the wireless devices 700 through, for example, a wireless network 705, an auxiliary I/O device 726, USB port 730, communication subsystem 702, or any combination of these interfaces. Such applications are then able to be installed by a user in the RAM 718 or a non-volatile store for execution by the microprocessor 714.

In a data communication mode, a received signal such as a text message or web page download is processed by the communication subsystem, including wireless receiver 706 and wireless transmitter 704, and communicated data is provided the microprocessor 714, which is able to further process the received data for output to the display 720, or alternatively, to an auxiliary I/O device 726 or the USB port 730. A user of the wireless devices 700 may also compose data items, such as e-mail messages, using the keyboard 722, which is able to include a complete alphanumeric keyboard or a telephone-type keypad, in conjunction with the display 720 and possibly an auxiliary I/O device 728. Such composed items are then able to be transmitted over a communication network through the communication subsystem.

For voice communications, overall operation of the wireless devices 700 is substantially similar, except that received signals are generally provided to a speaker 724 and signals for transmission are generally produced by a microphone 728. Alternative voice or input/output audio subsystems, such as a voice message recording subsystem, may also be implemented on the wireless device 700. Although voice or audio signal output is generally accomplished primarily through the speaker 724, the display 720 may also be used to provide an indication of the identity of a calling party, the duration of a voice call, or other voice call related information, for example.

Depending on conditions or statuses of the wireless device 700, one or more particular functions associated with a subsystem circuit may be disabled, or an entire subsystem circuit may be disabled. For example, if the battery temperature is low, then voice functions may be disabled, but data communications, such as e-mail, may still be enabled over the communication subsystem.

A short range wireless communications subsystem 732 is a further optional component which may provide for communication between the wireless device 700 and different systems or devices. One example of a shortwave communication system 732 transmits to a personal area network through antenna 762 using short range communication protocols such as BLUETOOTH^{®}, ZIGBEE^{®}, Near Field Communication or any network capable of transmitting audio data wirelessly. However these different systems or devices need not necessarily be similar devices as discussed above, The wireless communications subsystem 732 comprises one or more wireless transceivers, optionally associated circuits and components, and an optional infrared device for communicating over various networks such implementing one or more wireless communication technologies such as, but not limited to, Bluetooth^{®} and/or a wireless fidelity technologies.

A media reader 742 is able to be connected to an auxiliary I/O device 726 to allow, for example, loading computer readable program code of a computer program product into the wireless devices 340, 480, and 580 for storage into non-volatile memory 716. One example of a media reader 742 is an optical drive such as a CD/DVD drive, which may be used to store data to and read data from a computer readable medium or storage product such as machine readable media (computer readable storage media) 744. Examples of suitable computer readable storage media include optical storage media such as a CD or DVD, magnetic media, or any other suitable data storage device. Media reader 742 is alternatively able to be connected to the wireless device through the USB port 730 or computer readable program code is alternatively able to be provided to the wireless devices 340, 480, and 580 through the wireless network 703.

Although specific examples of the subject matter have been disclosed, those having ordinary skill in the art will understand that changes can be made to the specific examples without departing from the scope of the disclosed subject matter. The scope of the disclosure is not to be restricted, therefore, to the specific examples, and it is intended that the appended claims cover any and all such applications, modifications, and examples within the scope of the present disclosure.

## Claims

1. A method to display multimedia data comprising:
determining (204) a total number of communication channels (344, 346, 348) each providing respective distinct multimedia data (344, 346, 348);
dividing (206) a display on the wireless device into a plurality of regions (FIG. 1) a number of regions in the plurality of regions corresponding to the total number of communication channels (344,, 346, 348) with distinct multimedia data being received; and
simultaneously (208) displaying each of the respective distinct multimedia data in a respective region within the plurality of regions (FIG. 1), each region displaying one respective distinct multimedia data.

2. The method of claim 1, further comprising:
tracking a user's gaze position (FIG. 4, FIG. 5, 606) to a selected region of the regions of the display; and
playing an audio (604, 6060) of the respective distinct multimedia data displaying in the selected region.

3. The method of claim 2, wherein the audio is played through a wireless audio channel.

4. The method of claim 3, wherein the wireless audio channel is sent to one or more eyeglasses (FIG. 4, FIG. 5) used with the wireless device (FIG. 7).

5. The method of claim 4, wherein the eyeglasses (FIG. 4, FIG. 5) comprise 3-D eyeglasses.

6. The method of claim 4, wherein the eyeglasses (FIG. 4, FIG. 5) comprise at least one respective light source (404, 454) and the display comprises at least one optical sensor (484) coupled thereto, each optical sensor (484) associated with one of the regions (FIG. 4) of the display (480), the method further comprising sensing a position of the respective light source with the at least one optical sensor.

7. The method of claim 4, wherein the one or more eyeglasses (FIG. 4, FIG. 5) comprise at least one optical sensor (554), and wherein the tracking the user's gaze comprises tracking the user's gaze with the at least one optical sensor (554).

8. A wireless device to display multimedia data comprising:
a display (720);
a receiver (310, 706) configured to receive a plurality of communication channels (344, 346, 348), with at least two of the communication channels (344, 346, 348) containing distinct multimedia data ;
a microprocessor (714) in communications with memory (718) for executing instructions to
determine (204) a total number of communication channels (344,, 346, 348) each providing respective distinct multimedia data (344, 346, 348);
divide (206) the display (720) into a plurality of regions (FIG. 1), a number of regions in the plurality of regions corresponding to the total number of communication channels (344,, 346, 348) with distinct multimedia data being received; and
simultaneously (208) displaying each of the respective distinct multimedia data in a respective region within the plurality of regions (FIG. 1), each region displaying one respective distinct multimedia data.

9. The wireless device of claim 8, further comprising:
a sensor (484, 504) to track a user's gaze position configured to a selected region (FIG. 4, FIG. 5) of the regions of the display (480, 580); and
an audio subsystem (350) configured to play audio of the respective distinct multimedia data displaying in the selected region (480, 580).

10. The wireless device of claim 9, wherein the audio subsystem is associated with a wireless audio channel (350, 360, 362, 364).

11. The wireless device of claim 10, wherein the wireless audio channel sends the audio to one or more eyeglasses (FIG. 4 and FIG. 5) used with the wireless device.

12. The wireless device of claim 11, wherein the eyeglasses are 3-D eyeglasses (FIG. 4 and FIG. 5).

13. The wireless device of claim 11, wherein the eyeglasses (FIG. 4) comprise at least one respective light source (404, 454) and the display comprises at least one optical sensor (484) coupled thereto, each of the at least one optical sensor (484) being associated with one of the regions of the display (480) and is configured to sense a position of the respective light source.

14. The wireless device of claim 11, wherein the eyeglasses comprise at least one optical sensor (554) configured to track the user's gaze position.

15. An eyeglass set comprising:
a position transmitter (404, 554), to determine a user's gaze position relative to a plurality of regions (FIG. 4 and FIG. 5) on a display (480, 580) of a wireless device (340); and
a receiver (508, 558) configured to receive audio in response to transmitting the user's gaze position,
wherein the position transmitter (404, 544) comprises at least one
a light source (404) configured to illuminate at least one optical sensor coupled to the display of the wireless device, and
an optical sensor (554) to track gaze position.
